# EUROPÄISCHE PATENTSCHRIFT

(11) **EP 0 620 776 B1**
(45) Veröffentlichungstag und Bekanntmachung des Hinweises auf die Patenterteilung: **15.01.1997**
(21) Anmeldenummer: 93924048.7
(22) Anmeldetag: 25.10.1993
(51) Int. Cl.: B29B 17/00

(54) **VERFAHREN ZUR HERSTELLUNG EINES RECYCLEFÄHIGEN AGGLOMERATES AUS KUNSTSTOFFABFÄLLEN**
PROCESS FOR PRODUCING A RECYCLABLE AGGLOMERATE FROM PLASTIC WASTE
PROCEDE DE FABRICATION D'UN AGGLOMERAT RECYCLABLE DE DECHETS PLASTIQUES

(30) Priorität: 28.10.1992 DE 4236446
(43) Veröffentlichungstag der Anmeldung: 26.10.1994
(73) Patentinhaber: Dr. HERFELD GmbH & Co. KG, D-58809 Neuenrade (DE); Konrad Hornschuch Aktiengesellschaft, D-74679 Weissbach (DE)
(72) Erfinder: DERKSEN, Michael, D-85811 Lüdenscheid (DE); PETERS, Bernhard, D-58809 Neuenrade (DE); KAMMERER, Birgit, D-74635 Kupferzell (DE); SCHULZE-KADELBACH, Roland, D-74223 Flein (DE); SIEG, Ulrich, D-74679 Weissbach (DE)
(74) Vertreter: Tetzner, Volkmar, Dr.-Ing. Dr. jur.
(86) Internationale Anmeldenummer: EP9302953
(87) Internationale Veröffentlichungsnummer: WO9409959

(56) Entgegenhaltungen:
- EP-A- 0 103 754
- DE-A- 2 439 672
- DE-A- 2 929 664
- US-A- 4 105 593
- US-A- 4 184 829

## Beschreibung

Die Erfindung betrifft ein Verfahren gemäß dem Oberbegriff des Anspruches 1 sowie eine Verwendung entsprechend dem Anspruch 7.

Bei den herkömmlichen Verfahren zur Herstellung eines recyclefähigen Agglomerates aus Kunststoffabfällen können sogenannte reine Kunststoffabfälle verarbeitet werden, wobei die Ausgangsstoffe zerkleinert, gemischt, aufgeheizt und abgekühlt werden.

Bei der Produktion und Verarbeitung von faserhaltigen Kunststoffen bzw. beschichteten Textilien, z.B. PVC-Kunstleder, fallen jedoch in großen Mengen Gewebefolien und andere faserhaltige und beschichtete, nicht reine Kunststoffabfälle an.

Bei den Abfällen handelt es sich um Randstreifen, Fehlrollen, Rückware etc.. Die Beschichtungen werden in der Hauptsache aus PVC-, Polyurethan-, Polypropylen- und Polyamidbeschichtungen gebildet. Als Textilien werden vorzugsweise Baumwoll-, Polyester-, Polyamid-, Polypropylen- oder Gemische aus diesen Materialien eingesetzt.

Diese unreinen Kunststoffabfälle lassen sich jedoch durch das bekannte Verfahren nicht so aufbereiten, daß sie wieder dem Produktionsprozeß mit dem Ziel zugeführt werden können, daraus verkaufsfähige Produkte herzustellen. Bei der Anwendung des bekannten Verfahrens kommt es zu einer ungenügenden Verteilung der Fasern im Compound, der Faseranteil bleibt auf maximal 70% begrenzt und es wird eine Schädigung des Kunststoffmaterials während der Aufbereitung hervorgerufen.

Derartige unreine Kunststoffabfälle werden daher bislang kosten- und aufwendungsintensiv deponiert. Zu erwartende schärfere Gesetzgebungen im Umweltschutz werden eine solche Deponierung zukünftig noch wesentlich kostspieliger bzw. unmöglich machen.

Aus der US-A-4 184 829 ist ein Verfahren zur Herstellung eines recyclefähigen Agglomerates aus Kunststoffabfällen bekannt, wobei die für das Verfahren eingesetzten Ausgangsstoffe außer reinen Kunststoffabfällen auch faserhaltige Kunststoffabfälle enthalten. Die Ausgangsstoffe werden zerkleinert, gemischt, aufgeheizt und abgekühlt, wobei das Aufheizen in einem Banbury-Mixer erfolgt, dessen Manteltemperatur unter 60 °C gehalten wird.

Der Erfindung liegt die Aufgabe zugrunde, ein Verfahren anzugeben, das die Herstellung eines recyclefähigen Agglomerates aus faserhaltigen und/oder beschichteten, d.h. nicht reinen, Kunststoffabfällen ermöglicht sowie eine Verwendung des hergestellten Agglomerates aufzuzeigen.

Diese Aufgabe wird erfindungsgemäß durch das kennzeichnende Merkmal des Anspruches 1 gelöst. Ein auf diese Weise hergestelltes Agglomerat kann dann zur Herstellung von Kunststoffolien, die bis zu 100 % dieses Agglomerates enthalten, verwendet werden.

Dieses Verfahren ermöglicht eine abfallfreie Aufbereitung von faserhaltigen und/oder beschichteten, nicht reinen Kunststoffabfällen. Das hergestellte Agglomerat kann dann den bekannten Verfahren zur Herstellung beschichteter oder gefüllter Kunststoffolien oder gefüllter Formteile zugeführt werden.

Weitere Ausgestaltungen der Erfindung sind Gegenstand der Unteransprüche.

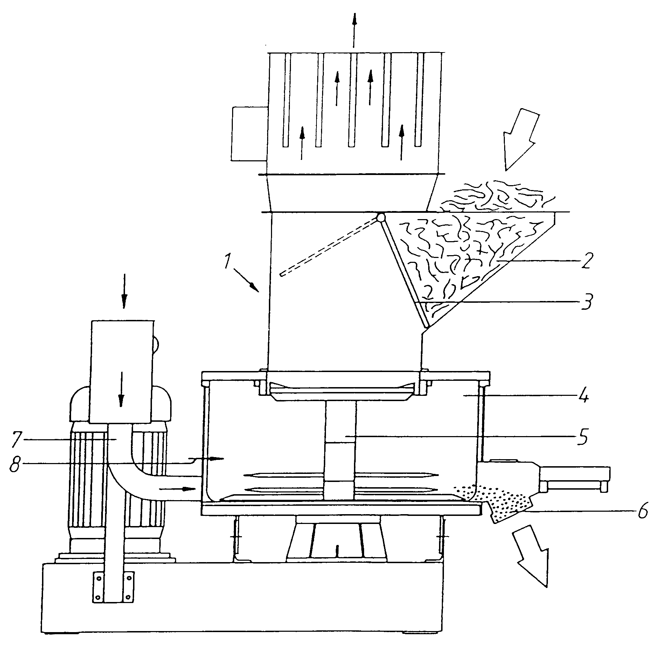

Im folgenden wird das Verfahren, seine Anwendung und ein Ausführungsbeispiel anhand der Beschreibung und der Zeichnung näher erläutert.

In der Zeichnung ist ein an sich bekannter Mischer 1 zur Durchführung des Verfahrens dargestellt.

Der Mischer 1 besteht im wesentlichen aus einer Schütte 2 zur Aufnahme der aufzubereitenden Kunststoffabfälle, einem Verdichterraum 4, in dem ein Rührwerk 5 vorgesehen ist sowie eine Auslaßöffnung 6.

Die Schütte 2 ist gegenüber dem Verdichterraum 4 durch eine Schüttenklappe 3 verschließbar. Das im Verdichterraum 4 angeordnete Rührwerk 5 ist in der Zeichnung lediglich schematisch dargestellt und besteht aus Zerkleinerungswerkzeugen, Mischflügeln, Rührelementen, Schneidwerkzeugen und dergleichen.

In den Verdichterraum 4 mündet ferner eine Kühlluftleitung 7 und es ist eine, durch den Pfeil 8 dargestellte Einrichtung vorgesehen, um Wasser zuzuführen. Der Verdichterraum 4 steht schließlich mit der Auslaßöffnung 6 in Verbindung.

Im folgenden wird das erfindungsgemäße Verfahren beschrieben:

Die für das Verfahren eingesetzten Ausgangsstoffe enthalten außer reinen Kunststoffabfällen auch faserhaltige und/oder beschichtete, nicht reine Kunststoffabfälle. Sie werden zerkleinert als Schnitzel oder zerschnitten auf eine Größe der Stücke von vorzugsweise kleiner 1 dm² nacheinander über die vorzugsweise trichterförmig ausgestaltete Schütte 2 dem Mischer zugeführt. Der Gewichtsanteil der reinen Kunststoffabfälle sollte dabei größer als der der nicht reinen Kunststoffabfälle sein. Es hat sich dabei ein Verhältnis von 1/3 bis 1/4 nicht reiner zu 2/3 bis 3/4 reiner Kunststoffabfälle als zweckmäßig erwiesen. Gegebenenfalls können dem Mischer noch Zuschlagsstoffe zugeführt werden.

Es erfolgt zunächst eine Zerkleinerung der zugeführten Kunststoffabfälle. Das Rührwerk 5, das vorzugsweise drei übereinander angeordnete Rührwerkzeuge aufweist, wird dabei bei einer auf den maximalen Rührwerkzeugdurchmesser bezogenen Umfangsgeschwindigkeit im Bereich von 30 m/s bis 100 m/s betrieben. Ein besonders zweckmäßiger Bereich für die Schneidwerkzeuge liegt zwischen 40 m/s und 65 m/s. Je nach Menge und Anteilsverhältnis der zu agglomerierenden unreinen Kunststoffabfälle beträgt die Rührdauer, d.h. die Dauer der durch das Rührwerk 5 verrichteten Rührarbeit, 5 bis 20 min, vorzugsweise 8 bis 10 min. Die durch die Zufuhr an Rührarbeit bewirkte Erhöhung der inneren Energie der zu verarbeitenden Kunststoffabfälle führt zu einer Erhöhung der Temperatur des aufzubereitenden Materiales. Durch einen in der Zeichnung nicht näher dargestellten Temperaturfühler mit entsprechender Anzeige wird die Temperatur permanent derart überwacht, daß sich die Kunststoffabfälle auf eine Temperatur von 110 bis 170°C, vorzugsweise auf 150 bis 160°C aufheizen. Bei Versuchen hat sich dabei ein besonders günstiger Temperaturwert von 154°C ergeben.

Während dieses Verfahrensschrittes wird ein Druck im Mischer von ungefähr 5 bis 10 bar erreicht.

Durch Zufuhr von Wasser (Pfeil 8) mit einer Temperatur von beispielsweise 16 bis 20°C wird das sich bildende Agglomerat wieder unter 100°C abgekühlt. Anschließend erfolgt ein weiterer aus Aufheizung und Abkühlung bestehender Behandlungszyklus. Aus Versuchen hat es sich dabei als sinnvoll erwiesen, diesen Behandlungszyklus insgesamt dreimal zu durchlaufen.

Die dem Agglomerat insgesamt zugeführte Wassermenge beträgt dabei bis zu 10 Gew.-%, vorzugsweise 3 bis 6 Gew.-%. Führt man beispielsweise 10 bis 50 kg Kunststoffabfälle dem Mischer zu, gewinnt man unter Zugabe von 0,5 bis 2 l Wasser ein Agglomerat von 0,45 bis 0,5 kg/dm³. Die auf diese Weise abfallfrei in ein Agglomerat umgewandelten Kunststoffabfälle können in verschiedenen Konzentrationen einem Weiterverarbeitungsprozeß, z.B. einem Kalander, zugeführt werden, um dort unmittelbar verarbeitet zu werden.

Die angegebenen Mengen sind entsprechend der Kapazität des Mischers ausgewählt. Je nach Größe des eingesetzten Mischers können davon abweichende Mengen unter der Voraussetzung eingesetzt werden, daß die in der Beschreibung angegebenen Mischungsverhältnisse eingehalten werden.

Im folgenden wird das obige Verfahren anhand eines konkreten Ausführungsbeispieles näher erläutert:

Bei diesem Ausführungsbeispiel setzen sich die für das Verfahren eingesetzten Ausgangsstoffe aus 20 kg PVC-Folienschnitzeln (reine Kunststoffabfälle) sowie 10 kg faserhaltige Randstreifen von PVC-Kunstleder (nicht reine Kunststoffabfälle) zusammen.

Diese Ausgangsstoffe werden in folgenden Kleinchargen auf einem Zuführband dem Mischer vorgelegt:
1) 5 kg faserhaltige Randstreifen
2) 5 kg faserhaltige Randstreifen
3) 10 kg PVC-Folienschnitzel
4) 10 kg PVC-Folienschnitzel

Vor Produktionsbeginn werden folgende Maschinenparameter fest eingestellt:
a) Wassereindüsung: 91°C
b) Kühlzeit: 25 sec.
c) Verdichtungstemperatur: 155°C
d) Zyklenzahl: 3

Nach Öffnen eines in der Zeichnung nicht näher dargestellten Schüttendeckels und Schließen der Schüttenklappe 3 wird die erste, aus 5 kg faserhaltigen Randstreifen bestehende Charge in der Schütte 3 dem Mischer vorgelegt. Nach anschließendem Schließen des Schüttendeckels sowie Öffnen der Schüttenklappe 3 wird die erste Kleincharge dem Zerkleinerungsprozeß zugeführt. Alsdann werden die weiteren Kleinchargen dem Mischer nach demselben Prinzip vorgelegt. Es ist jedoch darauf zu achten, daß die nachfolgenden Maschinenparameter für Temperatur sowie Stromaufnahme für die jeweiligen Kleinchargen nicht überschritten werden:

| a) 2. Kleincharge | | |
|---|---|---|
| 5 kg Randstreifen | < 120°C | < 120A |

| b) 3. Kleincharge | | |
|---|---|---|
| 10 kg PVC-Folienschnitzel | < 125°C | < 150A |

| c) 4. Kleincharge | | |
|---|---|---|
| 10 kg PVC-Folienschnitzel | < 130°C | < 180A |

Sind die Vorgabewerte überschritten, wird durch manuelles Eindüsen von Wasser eine Veränderung des Ist-Wertes eingeleitet, um somit den weiteren Füllvorgang durchzuführen.

Nach vollständigem Beschicken des Mischers wird der Automatikbetrieb gestartet.

Eine gute Agglomeration wird durch mehrere Zyklen erreicht. Beim Ablauf eines Zyklusses wird durch die Rührarbeit die innere Energie der Kunststoffabfälle auf eine Verdichtungstemperatur von 154°C erhöht.

Beim Erreichen der Verdichtungstemperatur wird durch gleichmäßiges Takten Wasser eingedüst (Pfeil 8), um die Temperatur auf 91°C abzukühlen. Damit beim Kühlprozeß kein erneuter Temperaturanstieg zu verzeichnen ist, wird bei ca. 100°C eine Luftkühlung (Kühlluftleitung 7) zugeschaltet. Beim Erreichen von 91°C ist ein Zyklus abgeschlossen.

Nach diesem Prinzip werden die eingestellten Zyklen nacheinander abgearbeitet, um nach dem dritten Zyklus ein Agglomerat für die anschließende Weiterverarbeitung, z.B. einem Kalandrierprozeß, zu erhalten. Aus den derart aufbereiteten Kunststoffabfällen lassen sich sowohl Formteile als auch Kunststoffbahnen herstellen. Bedingt durch die Faseranteile in den Agglomeraten zeigen insbesondere Folien verbesserte mechanische Eigenschaften in Faserrichtung. Diese werden insbesondere bei der Herstellung von Dichtungsbahnen ausgenutzt.

So kann beispielsweise folgender Produktaufbau realisiert werden:

Die Dichtungsbahn besteht aus mindestens zwei Schichten, von denen die eine aus faserfreiem Original- oder Recyclingmaterial und die zweite aus einer (z.B. kalandrierten) faserhaltigen Folie besteht. Die Stärke einer derartigen Konstruktion liegt bei 0,5 bis 1,5 mm, die Stärke der faserhaltigen Bahn bei ca. 0,2 bis 0,8 mm.

Weiterhin kann das nach dem obigen Verfahren hergestellte Agglomerat zur Herstellung einer faserhaltigen Kunststoffolie verwendet werden, die in einer inneren Lage in eine Schaumfolie eingebaut werden kann, um die Produkteigenschaften zu verbessern. Die Stärke dieser Folie liegt zweckmäßig bei ca. 0,2 bis 0,5 mm.

Auch die optischen Eigenschaften der nach dem Verfahren aus faserhaltigen Kunststoffabfällen hergestellten Folien lassen sich nutzbar machen, indem - wieder in einem Mehrschichtverbund - die Folie als Oberschicht, z.B. in einer Stärke von 0,1 bis 0,5 mm, eingesetzt und nach einem bekannten Verfahren bedruckt, geprägt oder in sonstiger Weise veredelt wird.

## Patentansprüche

1. Verfahren zur Herstellung eines recyclefähigen Agglomerates aus Kunststoffabfällen, wobei
a) die für das Verfahren eingesetzten Ausgangsstoffe außer reinen Kunststoffabfällen auch faserhaltige und/oder beschichtete, nicht reine Kunststoffabfälle enthalten,
b) die Ausgangsstoffe zerkleinert, gemischt, aufgeheizt und abgekühlt werden, und
c) die zerkleinerten und gemischten Ausgangsstoffe wenigstens zweimal einen aus Aufheizung und Abkühlung bestehenden Behandlungszyklus durchlaufen,
dadurch gekennzeichnet, daß
d) während des Behandlungszyklus die Kunststoffabfälle unter erhöhtem Druck von 5 bis 10 bar auf eine Temperatur von 110 bis 170 °C, vorzugsweise von 150 bis 160 °C, aufgeheizt werden und durch Zufuhr von Wasser auf eine Temperatur unter 100 °C abgekühlt werden.

2. Verfahren nach Anspruch 1, dadurch gekennzeichnet, daß der Gewichtsanteil der reinen Kunststoffabfälle größer als der der nicht reinen Kunststoffabfälle ist.

3. Verfahren nach einem der vorhergehenden Ansprüche, dadurch gekennzeichnet, daß die Kunststoffabfälle durch Rührarbeit aufgeheizt werden.

4. Verfahren nach Anspruch 3, dadurch gekennzeichnet, daß 5 bis 20 Minuten, vorzugsweise 8 bis 10 Minuten, Rührarbeit verrichtet wird.

5. Verfahren nach Anspruch 1, dadurch gekennzeichnet, daß die dem Agglomerat insgesamt zugeführte Wassermenge bis zu 10 Gew.%, vorzugsweise 3 bis 6 Gew.%, beträgt.

6. Verfahren nach einem der vorhergehenden Ansprüche, dadurch gekennzeichet, daß als Ausgangsstoffe vlies- oder gewebehaltige PVC-, Polyamid-, PES-, papierkontaminierte oder andere nicht reine Kunststoffabfälle Verwendung finden.

7. Verwendung des nach einem der vorhergehenden Ansprüche hergestellten Agglomerates zur Herstellung von Kunststoffolien, die bis zu 100% dieses Agglomerates enthalten.

## Claims

1. Method of producing a recyclable agglomerate from plastic waste, in which
a) in addition to pure plastic waste, the starting materials used for the method also contain fibre-containing and/or coated contaminated plastic waste,
b) the starting materials are comminuted, mixed, heated and cooled, and
c) the comminuted and mixed starting materials go at least twice through a treatment cycle consisting of heating and cooling,
characterised in that
d) during the treatment cycle the plastic waste at raised pressure of 5 to 10 bars is heated to a temperature of 110 to 170°C, preferably 150 to 160°C, and cooled by the delivery of water to a temperature below 100°C.

2. Method as claimed in Claim 1, characterised in that the proportion by weight of the pure plastic waste is greater than that of the contaminated plastic waste.

3. Method as claimed in one of the preceding claims, characterised in that the plastic waste is heated by agitation work.

4. Method as claimed in Claim 3, characterised in that agitation work is performed for 5 to 20 minutes, preferably 8 to 10 minutes.

5. Method as claimed in Claim 1, characterised in that the total quantity of water delivered to the agglomerate is up to 10% by weight, preferably 3 to 6% by weight.

6. Method as claimed in one of the preceding claims, characterised in that PVC, polyamide, PES waste containing woven or non-woven fabric, paper-contaminated or other contaminated plastic waste is used as starting materials.

7. Use of the agglomerate produced according to one of the preceding claims for the production of plastic films which contain up to 100% of this agglomerate.

## Revendications

1. Procédé de production d'un aggloméré recyclable de déchets de matière plastique, dans lequel
a) les matières premières utilisées pour le procédé contiennent en plus de déchets de matière plastique pure, également des déchets impurs de matière plastique contenant des fibres et/ou comportant un revêtement,
b) les matières premières sont fragmentées, mélangées, chauffées et refroidies et
c) les matières premières fragmentées et mélangées subissent au moins deux fois un cycle de traitement se composant d'un chauffage et d'un refroidissement,
caractérisé en ce que
d) pendant le cycle de traitement, les déchets de matière plastique sont chauffés sous une pression élevée de 5 à 10 bars à une température de 110 à 170°C, de préférence de 150 à 160°C, puis sont refroidis à une température inférieure à 100° par adduction d'eau.

2. Procédé selon la revendication 1, caractérisé en ce que la fraction en poids des déchets de matière plastique pure est supérieure à celle des déchets impurs de matière plastique.

3. Procédé selon l'une des revendications précédentes, caractérisé en ce que les déchets de matière plastique sont chauffés par un travail de brassage.

4. Procédé selon la revendication 3, caractérisé en ce que 5 à 20 minutes, de préférence 8 à 10 minutes sont utilisées pour le travail de brassage.

5. Procédé selon la revendication 1, caractérisé en ce que la quantité globale d'eau dirigée sur l'aggloméré atteint 10% en poids et elle est de préférence de 3 à 6% en poids.

6. Procédé selon l'une des revendications précédentes, caractérisé en ce que les matières premières utilisées sont des déchets impurs de matière plastique contenant des feutres ou des tissus, à base de PVC, de polyamide, de polyester, contaminés par du carton ou d'autres déchets impurs de matière plastique.

7. Utilisation de l'aggloméré réalisé suivant l'une des revendications précédentes pour la production de feuilles de matière plastique qui contiennent jusqu'à 100% de cet aggloméré.
